# EUROPÄISCHE PATENTANMELDUNG

(11) **EP 1 279 453 A2**
(43) Veröffentlichungstag der Anmeldung: **29.01.2003**
(21) Anmeldenummer: 02405602.0
(22) Anmeldetag: 12.07.2002
(51) Int. Cl.: B23D 19/06

(54) **Rollschneidvorrichtung sowie Einstellvorrichtung und Rollschneidkopf für eine solche Rollschneidvorrichtung**

(30) Priorität: 25.07.2001 CH 13882001
(71) Anmelder: Frei AG, 9303 Wittenbach (CH)
(72) Erfinder: Langhans, René, 9034 Eggersriet (CH)
(74) Vertreter: Gachnang, Hans Rudolf

(57) **Zusammenfassung**

Die Rollschneidvorrichtung trägt mindestens ein axial in Längsführungen (23) verschiebbares Gehäuse (1) mit einem darauf befestigten Rollschneidkopf (3). Das obere Rollmesser (9) steht in formschlüssiger Verbindung mit einem Antrieb, dessen Drehzahl im Verhältnis zum Antrieb des unteren Rollmessers (35) ein- und verstellbar ist. Bevorzugterweise umfasst die Klemmvorrichtung zum Festklemmen der einzelnen Gehäuse (1) eine federbelastete Klemmbacke (25). Diese wird besonders vorteilhaft durch eine Einstellvorrichtung (63), welche unterhalb der Gehäuse (1) verfahrbar angeordnet ist, betätigt. Gleichzeitig übernimmt die Einstellvorrichtung die exakte Positionierung der einzelnen Rollschneidköpfe (3) bei einem Formatwechsel der Blechzuschnitte.

## Beschreibung

Gegenstand der Erfindung ist eine Rollschneidvorrichtung mit einem Rollschneidkopf gemäss Oberbegriff des Patentanspruchs 1.
Gegenstand der Erfindung ist weiter eine Einstellvorrichtung zum Positionieren der axialen Lage des Rollschneidkopfs auf einer Rollschneidvorrichtung gemäss Oberbegriff des Patentanspruchs 4.
Gegenstand der Erfindung ist weiter ein Rollschneidkopf gemäss Oberbegriff des Patentanspruchs 6.

Eine Rollschneidvorrichtung mit axial verschiebbaren, das untere und das obere Rollmesser tragendem Gehäuse ist aus der EP 0600049 bekannt. Bei dieser bekannten Vorrichtung sind die beiden Rollmesser an einem z-förmigen Gehäuse fliegend gelagert und das Gehäuse ist auf einer Längsführung und auf einer Antriebswelle längs verschiebbar geführt und stufenlos feststellbar. Mit der Antriebswelle wird das untere Rollmesser über ein Zahnrad formschlüssig angetrieben. Das obere Rollmesser ist frei rotierbar am Gehäuse gelagert und wird durch einen aus elastischem Material hergestellten Transportring reibschlüssig mitgeschleppt. Die reibschlüssige Verbindung des oberen Rollmessers mit dem angetriebenen unteren Rollmesser kann Bogenschnitte verursachen, d.h. es kann zu nicht absolut geradlinig verlaufenden Schnitten kommen. Dies erschwert z.B. die Schweissung von Dosenrümpfen aus solchen Zuschnitten. Im weiteren ist das Gehäuse mittels einer Stellschraube auf einer Klemmwelle feststellbar. Durch das Festziehen der Stellschraube an der gewünschten Stelle auf den Längsführungen erfolgt eine Verkantung des Gehäuses bezüglich den Längsführungen und damit eine, wenn auch geringe, Schrägstellung der beiden zusammenwirkenden Rollmesser. Diese Schrägstellung kann ebenfalls zu Bogenschnitten führen, die sich im ungünstigen Falle mit dem durch Schlupf der beiden Rollmesser noch vergrössert. Nachteilig wirkt sich auch die bekannte Verklemmungsmethode des Gehäuses auf der Klemmwelle bezüglich der einzustellenden Abstände zwischen nebeneinander angeordneten Rollschneidköpfen und damit die Masse der zu schneidenden Platinen aus.

Die durch die EP 060049 bekannten Rollmesser lassen sich, da sie auf einem gemeinsamen Gehäuse angeordnet sind, auch gemeinsam verstellen und müssen nach der Verschiebung für einem Material- oder Dimensionswechsel für die zu schneidenden Bleche nicht auch nochmals bezüglich des Schneidspalts eingestellt werden wie die bei den älteren Schneidvorrichtngen notwendig ist. Das seitliche Verschieben der die Rollmesser tragenden Gehäuse auf den Längsführungen hingegen ist umständlich und das Einhalten von Toleranzen wird durch die ungenaue Klemmvorrichtung erschwert. Das Einstellen erfolgt durch vorhergehendes Lösen der Stellschrauben und danach Verschieben der einzelnen Gehäuse auf eine vorgegebene neue Position wo sie wiederum festgeklemmt werden müssen.

Aufgabe der Erfindung ist die Schaffung einer Rollschneidvorrichtung, die es ermöglicht, Bogenschnitte zu vermeiden bzw. wenn solche nach einem Materialwechsel auftreten korrigieren zu können.

Eine weitere Aufgabe der Erfindung besteht darin, bei einem Material- oder Dimensionswechsel der zu schneidenden Blechzuschnitte die die Rollmesser tragenden Gehäuse mit jeder geforderten Präzision entlang der Längsführungen vollautomatisch zu verschieben und zu positionieren.
Eine weitere Aufgabe der Erfindung besteht darin, die die Rollmesser tragenden Gehäuse nach dem Positionieren an der neuen Arbeitsposition derart zu verklemmen, dass kein Verkanten oder Schrägstellen der Gehäuse und damit der Rollmesser bezüglich der Führungsschienen erfolgen kann.

Gelöst werden diese Aufgaben durch eine Rollschneidvorrichtung gemäss den Merkmalen des Patentanspruchs 1, eine Einstellvorrichtung zu Einstellen der axialen Lage des Rollschneidkopfs gemäss den Merkmalen des Patentanspruchs 4 sowie einen Rollschneidkopf gemäss den Merkmalen des Patentanspruchs 6.

Durch eine seitlich der die Rollmesser tragenden Wellen angeordnete antreibbare Antriebswelle, welche im Betriebszustand über Ritzel mit den oberen Rollmessern in formschlüssigem Eingriff steht, kann die Drehzahl der oberen Rollmesser bezüglich der unteren Rollmesser eingestellt und verstellt werden und damit an die Oberflächeneigenschaften und -beschaffenheit sowie die Härte des zu verarbeitenden Blechs angepasst werden. Bogenschnitte können somit auf einfachste Weise durch manuelle Einstellung oder, falls Sensoren vorhanden sind, vollautomatisch korrigiert werden. Gleichzeitig wird der Verschleiss an den Rollmessern vermindert. Der Ein- und Ausbau eines einzelnen Rollschneidkopfes aus der Maschine, z.B. bei vorzeitiger Abnutzung eines der Rollmesser, ist jederzeit möglich und kann ohne neue Justierung der letzteren innert weniger Minuten erfolgen. Das verschlissene Messer kann ausserhalb der Rollschneidvorrichtung unter optimalen Bedingungen ersetzt werden.

Mit der automatisch arbeitenden Einstellvorrichtung können die Rollschneidköpfe bzw. die die Rollschneidköpfe tragenden Gehäuse innert Sekunden an neue Positionen geführt werden, welche andere Schneiddimensionen, d.h. andere Zuschnitthöhen, ermöglichen. Die Einstellung erfolgt im Toleranzbereich von Hundertstelmillimetern. Das erneute Festklemmen des Gehäuses an der neuen Position erfolgt noch im Zeitpunkt wo die Einstellvorrichtung das Gehäuse festhält und es kann daher auch die Position nach dem Festklemmen überprüft und allenfalls korrigiert werden. Mit der erfindungsgemässen Klemmvorrichtung erfolgt die Klemmung flächenförmig, wodurch ein Verkanten und dadurch ein Winkelfehler ausgeschlossen wird. Die Klemmung wird durch ein gleichmässig auf eine Klemmbacke wirkendes Federpaket aufrechterhalten. Das Federpaket wird nur während des Verschiebens und Neupositionierens ausser Wirkung gesetzt. Dies ermöglicht eine hohe Sicherheit während des Betriebs.

Anhand eine illustrierten Ausführungsbeispiels wird die Erfindung näher erläutert. Es zeigen:
- Figur 1: eine Seitenansicht des Gehäuses mit dem darauf aufgesetzten Rollschneidkopf,
- Figur 2: eine Aufsicht auf das Gehäuse und den Rollschneidkopf,
- Figur 3: einen Querschnitt durch das Gehäuse längs Linie III-III in Figur 1.

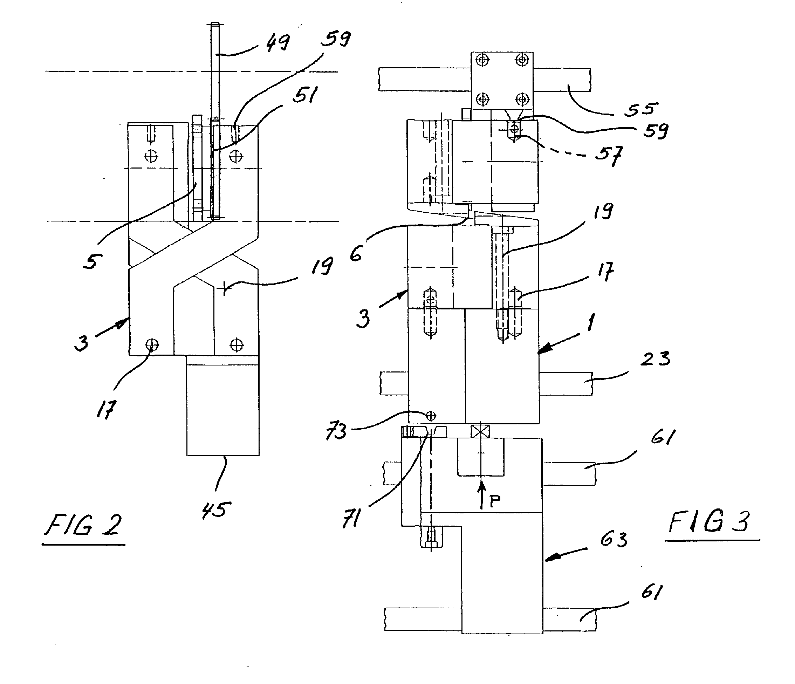

In den Figuren ist mit Bezugszeichen 1 das Gehäuse oder der Support für einen Rollschneidkopf 3 mit einem oberen Rollmesser 5 und einem unteren Rollmesser 7, das auf einer unteren Messerwelle 8 sitzt, bezeichnet. Der Rollschneidkopf 3 weist einen Z-förmigen Querschnitt auf (Fig. 3). Der Oberteil trägt das obere Rollmesser 5, der Unterteil das untere Rollmesser 7. Ober- und Unterteil sind durch einen schmalen Verbindungssteg 6 miteinander verbunden. Der Verbindungssteg 6 führt die beiden beim Schneiden erzeugten Kanten der Zuschnitte in der Höhe versetzt weg.

Auf der Peripherie der beiden Rollmesser 5 und 7 können Hartmetall-Schneidringe 9 und 11 sitzen. Das Gehäuse 1 weist eine präzis bearbeitete Trag- und Befestigungsfläche 13 auf, auf der die ebenfalls präzis bearbeitete Standfläche 15 des Rollschneidkopfs 3 aufliegt und mittels Zentrierstiften 17 positioniert und mit mindestens einer Befestigungsschraube 19 positionsgetreu mit dem Gehäuse 1 verbunden ist. Das Gehäuse 1 ist axial auf Führungsmitteln 21 im wesentlichen spielfrei entlang von Führungsschienen 23 verschieb- und durch eine Klemmbacke 25 an einer Klemmwelle 27 festklemmbar. Die Klemmbacke 25 ist auf einer Schwenkwelle 29 schwenkbar gehalten und durch ein Federpaket 31 im Uhrzeigersinn mit der Klemmfläche 33 an die Klemmwelle anpressbar gehalten. Im unteren Teil des Gehäuses 1 ist in einem nicht dargestellten Drehlager eine Büchse 35 mit einer Innenfeinverzahnung eingesetzt. Die Büchse 35 wird von einer Vielkeilwelle 37 durchdrungen, die sich im wesentlichen über die gesamte Breite der Rollschneidvorrichtung erstreckt und mit einem Antriebsmotor 39 verbunden ist. Auf der Vielkeilwelle 37 sitzt seitlich des Gehäuses 1 ein unteres Antriebszahnrad 39, das Teil der Büchse 35 sein kann oder an letzterer befestigt ist. Seitlich und vorzugsweise auf gleicher Höhe wie die Drehachse der oberen Rollmesserwelle 41 liegt eine obere Antriebswelle 43, die sich ebenfalls im wesentlichen über die Breite er Rollschneidvorrichtung erstreckt und von einem eigenen Antriebsmotor 45 angetrieben wird. Die obere Antriebswelle 43 durchdringt eine Büchse 47 mit einer der Antriebswelle 43 entsprechenden Bohrung mit Keilnuten. Die Büchse 47 trägt ein Antriebsritzel 49, welches mit einem Ritzel 51 am oberen Rollmesser 5 kämmt. Die Büchse 47 ist drehbar im oberen Antriebsgehäuse 53 gelagert. Das obere Antriebsgehäuse 53 wird von der Antriebswelle 43 und einer weiteren Führungsstange 55 axial verschiebbar getragen. Ein Mitnehmerstift 57 am Rollschneidkopf 3 greift spielfrei in einen oben offenen Schlitz 59 am oberen Antriebsgehäuse 53 ein und stellt eine spielfreie Verbindung des oberen Antriebsgehäuses 53 und dem Rollschneidkopf 3 sicher.

Unterhalb des Gehäuses 1 ist an den Führungsstangen 61 eine Positioniervorrichtung 63 längs verschiebbar gelagert. Das Gehäuse 65 der Positioniervorrichtung 63 wird von einer Spindel 67 mit einem Aussengewinde durchdrungen. Am Gehäuse ist eine entsprechende Hülse 69 mit Innengewinde eingesetzt, welches die Spindel 67 spielfrei aufnimmt und führt. Die Spindel 67 ist durch einen in den Figuren nicht dargesellten Elektromotor antreibbar.

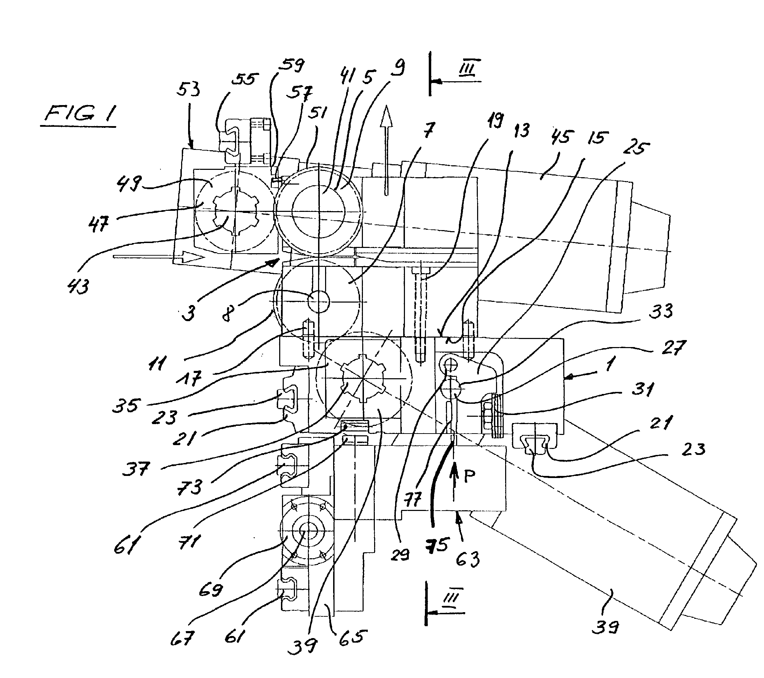

An der Oberseite der Positioniervorrichtung 63 ist in Figur 1 ein Mitnehmer 71 in Gestalt eines vorschiebbaren Riegels mit einer schlitzförmigen Ausnehmung mit sich konisch verengenden Flanken sichtbar. Gegenüber der Ausnehmung liegt an der Unterseite des Gehäuses 1 ein Stift 73, welcher bei vorgeschobenem Mitnehmer 71 von der Ausnehmung seitlich mindestens teilweise umfasst und spielfrei geführt wird. Weiter ist an der Oberfläche der Positioniervorrichtung 63 ein in Richtung des Pfeiles P vorschiebbarer Öffnungskeil 75 angeordnet, welcher in den Zwischenraum zwischen der Klemmbacke 25 und einer dieser gegenüberliegenden Wand 77 am Gehäuse 1 einschiebbar ist. Der Mitnehmer 71 und der Öffnungskeil 75 werden durch nicht dargestellte und beschriebene Linearantriebe betätigt. Dies können beispielsweise Elektromagnete oder Pneumatikzylinder sein.

Auf der als Gesamtes nicht dargestellten Rollschneidvorrichtung sind üblicherweise mehrere Gehäuse 1 mit darauf verschraubten Rollschneidköpfen 3 angeordnet. Jedem Rollschneidkopf 3 liegt ein oberes Antriebsgehäuse 53 gegenüber. Dieses ist durch den Mitnehmerstift 71 mit diesem axial spielfrei verbunden. Auf den beiden unteren Führungen 61 ist die Positioniervorrichtung 63 angeordnet. Die Rollmesserpaare 9,11 an den benachbarten Rollschneidköpfen 3 weisen einen gegenseitigen Abstand auf, welcher der Breite der zu schneidenden Zuschnitte entsprechen.

Sobald eine Änderung der Höhe der Zuschnitte notwendig ist, weil beispielsweise aus den Zuschnitten Metalldosen mit einer anderen Höhe oder einem andern Durchmesser hergestellt werden sollen, wird, angetrieben durch die Spindel 67 die Positioniervorrichtung 63 unter eines der beiden aussen liegenden Gehäuse 1 geführt, der Mitnehmer 71 ausgefahren und der Stift 73 erfasst. Danach wird auch der Öffnungskeil 75 nach oben in den Schlitz zwischen der Wand 77 und der Klemmbacke 25 eingeführt. Beim Einführen wird die Klemmbacke 25 gegen die Kraft des Federpakets 31 im Gegenuhrzeigersinn geschwenkt und damit die kraftschlüssige Verbindung zur Klemmachse 27 aufgehoben.

Nun erfolgt durch Drehung der Spindel 67 eine Verschiebung und Neupositionierung des äussersten Gehäuses 1 mit dem darauf sitzenden Rollschneidkopf 3. Sobald die gewünschte neue Position erreicht ist, dies gesteuert über eine Eingabetastatur oder durch Abruf der entsprechenden Daten aus einem Speicher, wird die Position von einer nicht dargestellten Sensorik überprüft. Stimmt die Ist-Position mit der Soll-Position überein, dies im Bereich von Hundertstelsmillimetern, fährt der Öffnungskeil 75 zurück und die Klemmbacke 25 wird durch das Federpaket 31 an die Klemmwelle 27 angepresst. Anschliessend werden die übrigen Rollschneidköpfe 3 in gleicher Weise nacheinander von der Positioniervorrichtung 63 an die neue Soll-Position herangeführt und dort kraftschlüssig befestigt.

Nach der Wiederaufnahme des Schneidvorgangs durch Antrieb der Antriebswellen 37 und 43 kann manuell oder über eine entsprechend empfindliche Sensorik die Schnittgenauigkeit bezüglich Bogenschnitts überprüft werden. Wird ein Bogenschnitt festgestellt, so lässt sich durch eine Veränderung des Verhältnisses der Drehzahl der unteren Antriebswelle 37 und der oberen Antreibswelle 43 die Schnittrichtung korrigieren. Die Korrektur kann selbstverständlich während des Betriebs der Rollschneidmaschine erfolgen.

Das Verstellen der Abstände sämtlicher Rollschneidköpfe 3 für einen Formatwechsel dauert bei einer durchschnittlich breiten Schneidmaschine mit sieben Schneidköpfen 3 ca. 5 Minuten. Dies ist ein Bruchteil des zeitlichen Aufwands, der für die Verstellung der bekannten Maschine notwendig ist und zudem ist auch nach einem Positionswechsel der einzelnen Rollschneidköpfe 3, deren exakte Ausrichtung durch die erfindungsgemässen Klemmbacken 25 gewährleistet. Veränderungen in der Beschaffung der Oberfläche der Bleche, beispielsweise Walzstruktur, Art der Beschichtung, Material der Beschichtung oder Härte des Materials, welche zum entstehen von Bogenschnitten führen kann, lassen sich auf einfache Weise und während des Betriebs der Maschine durch eine Änderung des Verhältnisses der Drehzahlen der unteren Antriebswelle 37 und der oberen Antriebswelle 43 korrigieren.

Das Demontieren eines oder mehrerer Rollmesser tragender Rollschneidköpfe 3 von der Schneidvorrichtung kann ohne zusätzliche Demontage anderer Maschinenteile erfolgen, weil beim Abheben der Rollschneidköpfe 3 die formschlüssige Verbindung ungehindert gelöst bzw. beim Wiederaufsetzen die formschlüssige Verbindung zwangsläufig wieder entsteht.

## Patentansprüche

1. Rollschneidvorrichtung mit einem Rollschneidkopf zum Schneiden von flachen Blechzuschnitten, umfassend ein oberes Rollmesser (5) und ein unteres Rollmesser (7), deren gegenseitige Lage axial einstellbar ist, eine obere Messerwelle (41) und eine untere Messerwelle (8), auf deren Enden die beiden Rollmesser (5,7) mit je einem Schneidering (9,11) sitzen, ein Gehäuse (1), in welchem die Messerwellen (8,41,) gelagert sind, eine mit der unteren Messerwelle (8) über ein Zahnrad formschlüssig in Eingriff stehende Antriebswelle (37) sowie parallel zu den Messerwellen (8,41) und der Antriebswelle (37) verlaufende Längsführungen (23), auf denen das Gehäuse (1) längsverschiebbar getragen und feststellbar ist, **dadurch gekennzeichnet, dass** parallel zur Achse der oberen Messerwelle (41) eine obere Antriebswelle (43) angeordnet ist, die über ein erstes Ritzel (49) in formschlüssigem Eingriff mit einem zweiten Ritzel (51) an der Messerwelle (41) steht.

2. Rollschneidvorrichtung nach Anspruch 1, **dadurch gekennzeichnet, dass** die obere Antriebswelle (43) ein oberes Antriebsgehäuse (53) durchdringt und das obere Antriebsgehäuse (53) durch einen Mitnehmerstift (57) in axialer Richtung spielfrei mit dem Rollschneidkopf (3) verbunden ist.

3. Rollschneidvorrichtung nach einem der Ansprüche 1 oder 2, **dadurch gekennzeichnet, dass** die Drehzahl der oberen Antriebswelle (41) mit dem oberen Rollmesser (5) bezüglich der Drehzahl der unteren Antriebswelle (37) für das untere Rollmesser (7) ein- und verstellbar ist.

4. Einstellvorrichtung zum Positionieren der axialen Lage des Rollschneidkopfs (3) auf einer Rollschneidvorrichtung gemäss Anspruch 1, umfassend ein oberes Rollmesser (5) und ein unteres Rollmesser (7), deren gegenseitige Lage axial einstellbar ist, eine obere Messerwelle (41) und eine untere Messerwelle (8), auf deren Enden die beiden Rollmesser (5,7) mit je einem Schneidering (9,11) sitzen, ein Gehäuse (1), in welchem die Messerwellen (8,41,) gelagert sind, eine mit der unteren Messerwelle (8) über ein Zahnrad formschlüssig in Eingriff stehende Antriebswelle (37) sowie parallel zu den Messerwellen (8,41) und der Antriebswelle (37) verlaufende Längsführungen (23), auf denen das Gehäuse (1) längsverschiebbar getragen und feststellbar ist, **dadurch gekennzeichnet, dass** unterhalb des Gehäuses (1) an einer Führungsstange (61) eine Positioniervorrichtung (63) längs verschiebbar gelagert ist und von einer Spindel (67) mit einem Aussengewinde axial verschieb- und längs der Führungsstange (61) positionierbar ist und dass an der Positioniervorrichtung (63) Mittel zum Erfassen des die Rollmesser (5,7) tragenden Gehäuses (1) sowie Mittel zum Lösen der Klemmung zwischen dem Gehäuse (1) und einer Klemmwelle (27) angeordnet sind.

5. Einstellvorrichtung nach Anspruch 4, **dadurch gekennzeichnet, dass** das Mittel zum Erfassen des die Rollmesser (5,7) tragenden Gehäuses (1) als ein ausfahrbarer Mitnehmer (71) und das Mittel zum Lösen der Klemmung zwischen dem Gehäuse (1) und einer Klemmwelle (27) als ein ausfahrbarer öffnungskeil (75) ausgebildet ist, welche beiden Mittel durch Elektromagneten oder Pneumatikzylinder antreibbar sind.

6. Rollschneidkopf (3) für eine Rollschneidvorrichtung gemäss Anspruch 1, umfassend ein oberes Rollmesser (5) und ein unteres Rollmesser (7), deren gegenseitige Lage axial einstellbar ist, eine obere Messerwelle (41) und eine untere Messerwelle (8), auf deren Enden die beiden Rollmesser (5,7) mit je einem Schneidering (9,11) sitzen, ein Gehäuse (1), in welchem die Messerwellen (8,41,) gelagert sind, eine mit der unteren Messerwelle (8) über ein Zahnrad formschlüssig in Eingriff stehende Antriebswelle (37) sowie parallel zu den Messerwellen (8,41) und der Antriebswelle (37) verlaufende Längsführungen (23), auf denen das Gehäuse (1) längsverschiebbar getragen und durch ein Klemmittel feststellbar ist, **dadurch gekennzeichnet, dass** das Klemmittel als eine federbelastete Klemmbacke (25) ausgestaltet ist, welche im Betriebszustand mit einer Klemmfläche (33) an eine Klemmwelle (27) angepresst wird.

7. Rollschneidkopf (3) nach Anspruch 6, **dadurch gekennzeichnet, dass** die Klemmbacke (25) an einer Schwenkwelle (29) angelenkt und daran zum Aufheben der Klemmkraft des Federpakets (31) schwenkbar ist.

8. Rollschneidkopf (3) nach Anspruch 7, **dadurch gekennzeichnet, dass** an der Unterseite des Gehäuses (1) eine Ausnehmung zum Einführen eine öffnungskeils (75) einer Einstellvorrichtung (63) und ein Stift (73) zum spielfreien axialen Führen des Rollschneidkopfs (3) mit der Einstellvorrichtung (63) angebracht sind.
